Europäisches Patentamt

(19) European Patent Office

Office européen des brevets

(11) Publication number: **0 118 232**
**A1**

(12) **EUROPEAN PATENT APPLICATION**

(21) Application number: **84300807.9**

(22) Date of filing: **08.02.84**

(51) Int. Cl.³: **C 04 B 35/52**
**C 25 B 11/12**

(30) Priority: **08.02.83 NZ 203220**

(43) Date of publication of application:
**12.09.84 Bulletin 84/37**

(84) Designated Contracting States:
**BE DE FR GB IT**

(71) Applicant: **DEVELOPMENT FINANCE CORPORATION OF NEW ZEALAND**
**Development Finance Centre Corner Grey and Featherston Streets**
**Wellington(NZ)**

(72) Inventor: **Sheat, Alistair William**
**20, Martin Grove**
**Normandale Lower Hutt(NZ)**

(74) Representative: **Collier, Jeremy Austin Grey et al,**
**J.A.Kemp & Co. 14, South Square Gray's Inn**
**London WC1R 5EU(GB)**

(54) Methods of manufacturing dense high quality carbon products.

(57) The invention relates to a process of manufacturing a "green" carbon product from fine particulate bituminous coal. The process involves filling a mould cavity with fine particulate bituminous coal of an acceptable kind, keeping the particulates within the mould in an oxygen free atmosphere at a controlled (critical) temperature at or adjacent the maximum contraction of incipient carbonisation to allow compaction of the particulates to a density level acceptable for further processing to produce high quality forms of carbon. Usually, pressure is sustained on the material within the mould.

Where the shape of the product is important heating of the material within the mould to a level of about 700°C follows soaking at the critical temperature so as to minimise cracking during cooling. Such a process is considered suitable for the production of carbon electrodes.

EP 0 118 232 A1

## "METHODS OF MANUFACTURING DENSE HIGH QUALITY CARBON PRODUCTS"

This invention relates to a method of manufacturing from bituminous coal dense high quality carbon suitable for use in various artefacts, such as electrodes or in other applications requiring such carbon.

It is already known to produce carbon electrodes from bituminous coal. A process for such electrode production is disclosed in United States patent specification No. 2594226. Large quantities of carbon electrodes are used in the manufacture of aluminium. Electrode carbon requires a high level of purity and a high density. The standards required have been difficult to achieve using coal as the raw material.

It is also known from United Kingdom patent specifications 561,498; 595,759; 595,760 and 849,414 to produce carbon artefacts or moulded articles from bituminous coal. An overview of such processes and the applications for the products is found in Fuel 1981, Vol.60, pp889-896.

The present invention relates to a method of manufacture of high quality carbon from bituminous coal and particularly with the aim of satisfying the standards specified for electrodes used in the manufacture of aluminium or for other forms of carbon and in the manufacture of carbon artefacts.

Accordingly the invention may broadly be said to consist in a process of manufacturing a "green" carbon product comprising the steps of filling a mould cavity with fine particulate bituminous coal having a percentage of impurities acceptable for the final use to which the carbon product is to be put, keeping the particles within the mould in an oxygen free atmosphere at a controlled temperature (hereinafter referred to as the "critical temperature") at or adjacent the maximum contraction of incipient carbonisation to allow compaction of the particles to a density level acceptable for further processing to produce high quality forms of carbon. The "critical temperature" is not necessarily a single value. Indeed it is more likely to be a temperature range.

Preferably a pressure (preferably slight) is applied to the content of the mould.

In one method the "green" carbon is removed from the mould after cooling and used in a similar way as petroleum coke after the product has been subjected to appropriate size reduction.

In an alternative process according to the present invention the "green" carbon product after soaking at the critical temperature and having attained its dense form is heated in said mould to a level of about 700°C so as to develop strength sufficient to prevent cracking during cooling.

As a variation of the method assuming suitable mould material is used the temperature of the "green" carbon in the mould can be raised to the temperature required for calcination to provide the final carbon form.

Preferably the carbon product is finally subjected to calcination of temperatures of above about 1200°C.

In one preferred embodiment the material charged to the mould cavity is fine bituminous coal.

In another embodiment suitable for improving the carbon quality or for achieving a more suitable carbon structure the fine bituminous coal is admixed with recycled distillation products from the carbonisation process.

Normally the material charged to the mould will be at about ambient temperature but in order to increase thermal efficiency or to increase throughput or for other reasons preheating of the charge may be warranted.

The bituminous coal particles are normally treated by one or more beneficiation processes to reduce the ash, iron and other impurities to an acceptable level.

For acceptable economic realisation the bituminous coal selected should have a low natural ash content.

To achieve the required density the temperature is controlled to a critical specific level, which varies with the coal but which normally lies within the limits of 360 to 410°C. This temperature is maintained for a period of from about 17 hours to about two days although this may vary with the type of coal employed and with the form of the carbon required.

A slight pressure is preferably applied to the particulate bituminous coal contained in the mould for instance by means of a weight resting on the top of the coal.

The invention consists in the foregoing and also envisages constructions of which the following gives examples.

One preferred form of the present invention will now be decribed. In the preferred form of the present invention bituminous coal, preferably a coal having a low natural ash content such as is available in the Stockton area of the Buller coal field on the West Coast of New Zealand, is used as a raw material. Analysis of a typical coal employed is given in table 2, example 1.

In general the process of the invention comprises the following steps.

1. Coal is crushed to approximately minus 500um if not already this size.

2. A quantity of this coal is packed into the retort. (Two sizes have been used, a 60mm diameter cylindrical retort and a 90 x 190mm cross-section rectangular retort).

3. A weight equivalent to a pressure of approximately 3 kPa to 5 kPa is placed on top of the compacted coal charge.

4. The retort is heated to a critical specific temperature normally lying between the limits of 360-410°C, and held at that temperature for a specified length of time, normally between 17 and 48 hours.

5. A high-volatile (approximately 20-30% volatile matter) green coke is formed. This green coke can be calcined to give a dense coke.

Parameters which affect the density of the resultant coke were:

1. time at the soak temperature.

2. soaking temperature.

3. coal granulometry.

The density of the coke was most sensitive to the coking temperature parameter. For the coal studied the temperature had to be controlled to between 370 and 380°C.

The particles of the bituminous coal may have been improved in purity to the required level using any of a number of beneficiation processes. The coal is placed into a mould cavity which is heated to a controlled temperature in an oxygen free atmosphere while being subjected to a slight pressure of the order 10 kPa. The temperature selected is that at which the bituminous coal undergoes a high degree of contraction with appropriate development of fluidity. This critical temperature normally lies between the limits of 360° to 410°C and the time taken for the process to complete is normally from 17 hours to 2 days.

The contraction which occurs with a bituminous coal in the initial stages of carbonising and before the mass starts to swell, is illustrated by a dilatometer curve such as that produced by an Audibert Arnu dilatometer which also records the temperatures at which the contraction occurs, given a standard heating rate of 3°C per minute. The critical temperature required for maximum density of the carbon produced in the patented process will not be the same as the temperature indicated in a dilatometer test, if the heating rates are different. However, the data from the standard dilatometer test can provide some indication of the optimum temperature required in the patented process.

Similar coals varying in their state of oxidation may exhibit different critical temperatures. With an oxidised coal, a higher temperture will be required for maximum densification but the soaking time will be reduced. Coal after mining, can be oxidised artificially in a simple process to reproduce the effect described above for an oxidised coal.

The mould cavity selected will to some extent depend upon the particular form of the process which is to be effected. In one form the object is to secure a dense carbon product which after being reduced in size using appropriate equipment will be a substitute for petroleum coke in conventional electrode manufacture. In such a process the shape of the mould is not critical and small or large blocks may be produced. Particulate carbon of the desired particle size would then be used in a mix with pitch to form the electrodes as are normally now produced using petroleum coke. These electrodes would then be compressed in a mould and be subjected to calcining in the usual way.

In another aspect of the present invention where the carbon is required in a monolithic form, the carbon is placed in the mould and a light pressure applied. After achieving the degree of density required by soaking at the critical temperature, the temperature of the carbon in the mould remaining in the furnace, is raised to a significantly higher level to improve the strength characteristics of the carbon. In this technique it is necesssary to select a mould cavity which is consistent with the shape and size of the carbon finally required. It is also necessary to control the temperature to which the product is elevated to something that can be withstood by the mould. A temperature of approximately 700°C is an acceptable temperature having regard to all of the controlling parameters. The strengthened product which is then removed from the mould would normally be subjected to calcining in a manner similar to that used currently with the electrode blocks using petroleum coke.

In an alternative method of the present invention, subject to appropriate selection of materials for the mould, the process is completed by calcining in the mould cavity. The optimum temperature for calcining is above about 1200°C, preferably 1290°C.

In Table 1 a comparison is made between the properties of an optimum anode made by the process of the present invention and a typical anode made by a conventional process.

Table 1: COMPARISON BETWEEN THE PROPERTIES OF
TYPICAL CONVENTIONAL ANODES
AND AN OPTIMUM ANODE PREPARED BY THE METHOD
OF THE PRESENT INVENTION

| Property | Typical Anode | Optimum by Present Process |
|---|---|---|
| Geometric density kg/m$^3$ | 1,550 - 1,650 | 1,500 - 1,550 |
| Electrical Resistivity ohm-mm | 0.045 - 0.060 | 0.041 - 0.057 |
| Open porosity % | 20 - 30 | 5 - 14 |
| Closed porosity % | 4 - 12 | 8 - 17 |
| Electrolytic consumption % of theoretical | <110 (indicates very good electrode) >120 (indicates poor electrode) | 106 (mean) |

EXAMPLE 1: PREPARATION OF 30 kg OF GREEN COKE

(A)　　A coal sample (analysis table 2) was beneficiated by tabling to give a product coal with 0.14% ash. The coal was crushed to a granulometry (table 3) and packed into a steel retort of cross sectional dimension 90 x 190 mm. A weight equivalent to a pressure of 6kPa was placed on top of the moderately compacted (by hand pressure) coal charge. The retort was placed in a furnace which was previously heated to 375°C. The retort remained in the furnace for a total coking time of 48 hours. Approximately 3500 g of coal was coked in each batch. Apparent density of some representative green coke samples was measured. One batch was calcined for calcined coke apparent density determination.

Results: Green coke　: approximate volatile matter 20%
　　　　　　　　　　　　 apparent density (g/cm$^3$) 1.07 - 1.11
　　　　Calcined coke : apparent density (g/cm$^3$) 1.49 - 1.52

Table 2: Coal Analysis

Air Dried Analysis:

| | | |
|---|---|---|
| Moisture | – % | 1.2 |
| Ash | – % | 0.3 |
| Volatile Matter | – % | 35.3 |
| Fixed Carbon | – % | 63.2 |
| Sulphur | – % | 0.7 |
| Crucible Swelling No. | | 9 |

Ultimate Analysis (dry, ash free basis):

| | | |
|---|---|---|
| C | – % | 86.1 |
| H | – % | 5.6 |
| N | – % | 1.3 |
| S | – % | 0.7 |
| O (diff) | – % | 6.3 |

Table 3: Coal Granulometry

Size Fraction (um) – %

| | |
|---|---|
| +850 | 0.8 |
| –850 +425 | 6.9 |
| –425 +212 | 17.8 |
| –212 +106 | 26.7 |
| –106 | 47.9 |

Table 4: Gieseler Plastometer – Coal Sample Example 1(A)

Temperatures:

| | | |
|---|---|---|
| Initial Softening (1 ddpm) | °C | 406 |
| Fusion 5 ddpm | °C | 423 |
| Maximum Fluidity | °C | 450 |
| Resolidification | °C | 482 |
| Range Softening to Resolidification | °C | 76 |

Fluidity:

| | |
|---|---|
| Maximum dial divisions per minute | 581 |
| Expressed as $\log_{10}$ | 2.76 |

Note:

The measurement was performed 13 months from the date the sample was collected. The sample which was measured was stored in a deep freeze at –18 mm size. The +4.75 mm coal fraction had a maximum fluidity of 897. This is probably nearer to the

original value for the fresh coal. The coke was prepared two months after the date of sample collection, that is eleven months before the Gieseler plastometer test was performed.

EXAMPLE 2

An air-dried coal sample (analysis Table 5) was crushed to two different granulometries (Table 6). The crushed coal was coked 400 g at a time in 61 mm diameter stainless steel retorts. A weight equivalent to a pressure of 3 kPa was placed on top of the moderately compacted (by hand pressure) coal charge. The retorts were placed in a furnace which was previously pre-heated to the desired coking temperature.

The two different coal granulometries were coked at various temperatures and times. Sample weight loss, green apparent densities and some selected calcined coke apparent densities were measured.

Green coke was calcined by first baking at 60°C per hour up to 700°C, followed by calcination at 1300°C for approximately 1 hour.

The heat-up rate and time to reach thermal equilibrium of the coal charge was also measured.

A brief investigation of the effect of increasing the weight on top of the coal charge on the density, was carried out at the temperature which gave the best density coke for the 3 kPa weight (375°C). A weight equivalent to a pressure of 30kPa was used for this purpose.

Results: The centre of the coal charge reached equilibrium temperature (within 1°C over the whole charge) in five hours.

(a)     Weight loss during coking (Table 7)

The coal continued to lose weight due to decomposition after thermal equilibrium had been reached. The rate of weight loss decreased after twenty-four hours. This effect was consistent for all the temperatures studied. The weight loss after twenty-four hours at 380°C was 13% compared with 8% at 360°C. This effect is significant when considering the maximum heating rate which can be applied to the green coke without it puffing up to form a low density coke. The greater the weight loss of the sample, that is the lower the residual volatile matter of the green coke, the faster the green coke can be coked to remove the remaining volatiles.

(b) Green Coke Apparent Density (Table 8)

(i) Coking temperature

The greatest green coke apparent density was obtained by coking at 375ºC, both coal granulometries. The apparent densities for the green cokes were similar within the range of 370 to 380ºC. At 380ºC the maximum apparent density was achieved faster compared with lower temperatures. At 385ºC some greater degree of carbonisation produced a low density swollen green coke.

(ii) Coking time

At lower working temperatures, dense coke formation is greatly affected by time. At higher temperatures, for example 375 and 380ºC, the effect of time was significant only in the initial coking period. From 370ºC to 380ºC there was little difference in green coke apparent density for coking times of 17 and 24 hours.

(iii) Coal granulometry

After 17 and 24 hours coking, coke made from the finer coal granulometry had a higher apparent density compared with coke made from the coarse granulometry. For times of 5 and 6 hours, and for temperatures of 360 and 365ºC the opposite is true; that is the coarse coal granulometry gives rise to the highest green coke apparent density.

(c) Calcined Coke Apparent Density

(i) Coking temperature:

Maximum calcined coke apparent density was achieved for temperatures 375 and 380ºC, with 370ºC coke density being slightly less. At 360 and 365ºC coking temperature, the calcined coke density was considerably reduced.

(ii) Coal Granulometry

The highest apparent density (1.60-1.63) is achieved when the coke is made from the finer coal granulometry. This effect is the most significant at 380ºC, where an increase from 1.53 $g/cm^3$ to 1.61 $g/cm^3$ was achieved. For the lower

temperatures, 360 and 365°C, the coke made from the coarse granulometry coal has the higher apparent density.

(iii) Weight on Coal Charge:

The increased pressure from 3 kPa to 30 kPa did not result in an improvement of apparent density.

Conclusions:

1. Coal decomposition was a function of both time and temperature in the temperature range studied.

2. Dense green coke formation was a function of time and temperature. It is probable the dense coke formation was related to coal decomposition.

3. Finer coal granulometry gave rise to a higher green coke density within a limited temperature and coking time range.

4. The density of the coke produced, green or calcined was very sensitive to temperature of coking. For the coal studied, a temperature range of approximately 10°C will result in coke of similar green and calcined density.

5. The maximum calcined coke density produced by this method was 1.63 g/cm$^3$. Generally, this method of coking resulted in a coke of density approximately 1.6 g/cm$^3$ providing coal granulometry and coking temperature were controlled.

Table 5: COAL ANALYSIS

Sample:              30/365

Air Dried Analysis:

| | | |
|---|---|---|
| Moisture | - % | 1.0 |
| Ash | - % | 0.2 |
| Volatile Matter | - % | 34.8 |
| Fixed Carbon | - % | 64.0 |
| Sulphur | - % | 1.00 |
| Crucible Swelling No. | | 9+ |

Ultimate Analysis: (dry, ash free)

| | | |
|---|---|---|
| C | - % | 85.8 |
| H | - % | 5.5 |
| N | - % | 1.3 |
| S | - % | 1.0 |
| O (diff.) | - % | 6.3 |

Table 6: COAL GRANULOMETRY

| Size Fraction (um) | Gran.1 % | Gran.2 % |
|---|---|---|
| -850 +425 | 11.1 | 0 |
| -425 +212 | 35.9 | 5.4 |
| -212 +150 | 13.0 | 14.4 |
| -150 +106 | 11.5 | 23.7 |
| -106 +75 | 7.1 | 22.8 |
| - 75 | 21.3 | 33.5 |

Table 7: COAL WEIGHT LOSS DURING COKING

| Temp. °C | Coking Time hr. | Weight Loss (Gran.1) % |
|---|---|---|
| 360 | 5 | 3.5 |
|  | 6 | 4.0 |
|  | 17 | 7.1 |
|  | 24 | 8.1 |
| 365 | 5 | 4.1 |
|  | 6 | 4.7 |
|  | 17 | 8.6 |
|  | 24 | 9.4 |
| 370 | 5 | 4.5 |
|  | 6 | 5.3 |
|  | 17 | 9.7 |
|  | 24 | 10.8 |
| 375 | 5 | 5.3 |
|  | 6 | 6.1 |
|  | 17 | 11.4 |
|  | 24 | 11.7 |
| 380 | 5 | 6.2 |
|  | 6 | 7.2 |
|  | 17 | 12.1 |
|  | 24 | 13.0 |

Table 8: GREEN COKE APPARENT DENSITY

|  | | | Coke Apparent Density (g/cm$^3$) | |
|---|---|---|---|---|
| Temp. °C | | Coking Time (hrs) | Gran. 1 | Gran. 2 |
| 360 | | 5 | <1 | <1 |
|  | | 6 | <1 | <1 |
|  | | 17 | 1.02 | 1.03 |
|  | | 24 | 1.08 | <1 |
| 365 | | 5 | <1 | <1 |
|  | | 6 | <1 | <1 |
|  | | 17 | 1.08 | 1.07 |
|  | | 24 | 1.08 | 1.03 |
| 370 | | 5 | 1.01 | <1 |
|  | | 6 | 1.04 | <1 |
|  | | 17 | 1.12 | 1.14 |
|  | | 24 | 1.14 | 1.14 |
| 375 | | 5 | 1.09 | 1.08 |
|  | | 6 | 1.13 | 1.05 |
|  | | 17 | 1.14 | 1.18 |
|  | | 24 | 1.16 | 1.18 |
| 380 | | 5 | 1.14 | 1.13 |
|  | | 6 | 1.13 | 1.11 |
|  | | 17 | 1.10 | 1.17 |
|  | | 24 | 1.13 | 1.16 |
| 385 | | 5 | <1 | <1 |
|  | | 6 | <1 | <1 |
|  | | 17 | <1 | <1 |
|  | | 24 | <1 | <1 |

Table 9: CALCINED COKE DENSITY

| Temp. °C | Coking Time (hrs) | Coke Apparent Density (g/cm³) | |
|---|---|---|---|
| | | Gran. 1 | Gran. 2 |
| 360 | 17 | | |
| | 24 | 1.48 | 1.39 |
| 365 | 17 | | 1.53 |
| | 24 | 1.50 | 1.45 |
| 370 | 17 | | 1.55 |
| | 24 | 1.57 | 1.56 |
| 375 | 17 | | 1.61 |
| | 24 | 1.58 | 1.58-1.60 |
| 380 | 17 | | 1.63 |
| | 24 | 1.53 | 1.61 |
| 375 (300 g/cm³) | 24 | | 1.60-1.63 |

Table 10: GIESELER PLASTOMETER - COAL SAMPLE EXAMPLE 2

Temperatures:

Initial Softening (1 ddpm) °C　　　407

Fusion at 5 ddpm　　　°C　　　428

Maximum Fluidity　　　°C　　　454

Resolidification　　　°C　　　481

Range Softening to

Resolidification　　　°C　　　76

Fluidity:

Maximum dial divisions

per minute　　　170

Expressed at $\log_{10}$　　　2.24

Note:

This test was performed seven months from the date the sample was collected and five to six months from the dates that the coking experimental work was carried out. It is possible that the original coal fluidity may have been higher, but not greatly so, as a measurement on plus 6 mm coal (less susceptible to oxidation deterioriation) gave maximum fluidity of 212 ddpm.

0118232

- 16 -

<u>CLAIMS</u>:

1. A process of manufacturing a "green" carbon product comprising the steps of filling a mould cavity with fine particulate bituminous coal having a percentage of impurities acceptable for the final use to which the carbon product is to be put, keeping the particles within the mould in an oxygen free atmosphere at a controlled temperature (hereinafter referred to as the "critical temperature") at or adjacent the maximum contraction of incipient carbonisation to allow compaction of the particles to a density level acceptable for further processing to produce high quality forms of carbon.

2. A process as claimed in claim 1 wherein a pressure is applied to the content of the mould.

3. A process according to claim 1 or claim 2 wherein said "green" carbon is removed from said mould after cooling and used in a similar way as petroleum coke after the product has been subjected to appropriate size reduction.

4. A process according to claim 1 or claim 2 wherein said "green" carbon product after soaking at the critical temperature and having attained its dense form is heated in said mould to a level of about 700°C so as to develop strength sufficient to prevent cracking during cooling.

5. A process according to claim 1 which includes using a suitable mould material and raising the temperature of the "green" carbon in the mould to the temperature required for calcination to provide a final carbon form.

6. A process according to claim 5 wherein said carbon product is finally subjected to calcination at a temperature of above about 1200°C.

7. A process according to claim 1 which includes the preliminary step of admixing of said fine bituminous coal with recycled distillation products from said carbonisation process.

8. A process according to claim 1 wherein said material charged to said mould is at about ambient temperature.

9. A process according to claim 1 wherein said material charged to said mould is preheated.

10. A process according to claim 1 wherein said bituminous coal particles are treated by one or more beneficiation processes to reduce the ash, iron and other impurities to an acceptable level prior to filling said mould cavity.

11. A process according to claim 1 wherein there is used a bituminous coal having a low natural ash content.

12. A process according to claim 1 wherein said mould temperature is controlled at a critical temperature range within the limits of 360°C to 410°C and is held at this temperature for a period of up to two days.

13. A process according to claim 2 wherein said pressure is applied by means of a weight resting on the top of the coal.

European Patent
Office

EUROPEAN SEARCH REPORT

0118232
Application number

EP 84 30 0807

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,A | GB-A- 595 759 (C.D. PATENTS LTD.) | | C 04 B 35/52<br>C 25 B 11/12 |
| | --- | | |
| D,A | GB-A- 595 760 (C.D. PATENTS LTD.) | | |
| | --- | | |
| D,A | GB-A- 849 414 (KOGYO-GIJUTSU-IN) * Claims 1, 2 * | | |
| | --- | | |
| A | GB-A-1 484 601 (COAL INDUSTRY PATENTS LTD.) * Claims 1, 3, 7, 14 * | | |
| | --- | | |
| A | US-A-2 998 375 (W.S. PETERSON et al.) * Claim 1 * | | TECHNICAL FIELDS SEARCHED (Int. Cl. ³) |
| | --- | | |
| A | US-A-4 117 098 (K. TATSUMOTO et al.) * Claims 1, 4, 8 * | 1 | C 04 B 35/52<br>C 25 B 11/12<br>C 25 C 3/12 |
| | --- | | |
| A | DE-C- 854 470 (C.D. PATENTS LTD.) * Claims 1, 7 * | | |
| | --- | | |
| A | CH-A- 593 351 (ARDAL OG SUNNDAL VERK AB) * Claim * | | |
| | ----- | | |

The present search report has been drawn up for all claims

| Place of search | Date of completion of the search | Examiner |
|---|---|---|
| BERLIN | 10-05-1984 | STROUD J.G. |